# EUROPEAN PATENT SPECIFICATION

(11) **EP 0 599 405 B1**
(45) Date of publication and mention of the grant of the patent: **11.02.1998**
(21) Application number: 93203227.9
(22) Date of filing: 18.11.1993
(51) Int. Cl.: H05B 41/29, H02M 1/00, H02M 1/12

(54) **Low harmonic power supply for a discharge lamp**
Vorschaltgerät mit niedrigem Oberwellengehalt für eine Entladungslampe
Alimentation à faible taux d'harmoniques pour une lampe à décharge

(30) Priority: 26.11.1992 EP 92203651
(43) Date of publication of application: 01.06.1994
(73) Proprietor: Philips Electronics N.V., 5621 BA Eindhoven (NL)
(72) Inventor: Bergervoet, Jozef Reinerus Maria, NL-5656 AA Eindhoven (NL)
(74) Representative: Evers, Johannes Hubertus Maria

(56) References cited:
- EP-A- 444 428
- EP-A- 0 488 478
- EP-A- 0 541 909
- WO-A-92/04808
- US-A- 5 223 767
- ISAO TAKAHASHI 'Conference Record of the 1990 IEEE Industry Applications Society Meeting (part II)' 12 October 1990 , SEATTLE pages 1290 - 1291

## Description

The invention relates to a circuit arrangement suitable for high-frequency operation of a discharge lamp, provided with
- input terminals for connection to a low-frequency supply voltage source,
- rectifying means coupled to the input terminals for rectifying a low-frequency supply voltage supplied by the low-frequency supply voltage source,
- a first branch comprising first capacitive means and connected to the rectifying means,
- a DC-AC-converter coupled to the first capacitive means for generating a high-frequency current from a direct voltage present across the first capacitive means, said DC-AC-converter being provided with a load circuit comprising a series arrangement of an inductive element, lamp connection terminals and further capacitive means (36), and
- a further branch of which a first end is connected to a terminal of the DC-AC-converter at which a high-frequency voltage is present during lamp operation and of which a second end is coupled to the rectifying means.

High frequency operation of a discharge lamp in this connection is understood to mean operation at an operating frequency of approximately 10 kHz and higher. A low-frequency supply voltage is understood to mean, for example, a substantially sinusoidal mains voltage with a frequency of, for example, 50 or 60 Hz.

Such a circuit arrangement is known from the "Conference record of the 1990 IEEE Industry Applications Society Annual Meeting, Part II, pages 1289 - 1294". The DC-AC-converter of the circuit arrangement disclosed in that document is a bridge circuit and the further branch connects a terminal between the switching elements comprised in the bridge circuit with one of the input terminals. Such a circuit arrangement is also known from WO-A-9204808. In the circuitry disclosed in that document the DC-AC-converter also is a bridge circuit and the further branch (being identical to the load circuit) connects a terminal between the switching elements comprised in the bridge circuit with an output terminal of the rectifying means. EP-A-0444428 discloses a circuit arrangement comprising a bridge circuit. The circuit arrangement is further equipped with a load circuit and a further branch, said load circuit comprising a series arrangement of inductive means and a load and connecting a terminal between the switching elements of the bridge wit an input terminal,and said further branch comprising a capacitor coupling a terminal of the load circuit to the input terminal. The circuit arrangement further comprises a transformer equipped with three windings to suppress high modulation frequency noises. A third circuit arrangement that fits the description in the opening paragraph is disclosed in US 4,782,268. That circuit arrangement also comprises a DC-AC converter consisting of a bridge circuit. The further branch comprises both inductive and capacitive means and in addition two diodes. A first end of the further branch is connected to a junction point of two switching elements forming part of the bridge circuit. A further end of the further branch is connected to an output of the rectifying means. It is achieved by means of the further branch that the circuit arrangement behaves like an ohmic resistance to a considerable degree during lamp operation. As a result, the circuit arrangement causes only a comparatively small amount of interference in the low-frequency supply voltage source and a high power factor is realised by the circuit arrangement during lamp operation.

A disadvantage of the known circuit arrangement is that, in addition to the diodes forming part of the rectifying means, further diodes are necessary, *i.e.* the two diodes in the further branch, for realising the favourable properties of the circuit arrangement as regards mains interference and power factor.

The invention has for its object *inter alia* to provide a circuit arrangement for the high-frequency operation of a discharge lamp with which a comparatively high power factor and only a comparatively small amount of mains interference can be realised during lamp operation, while the means by which these favourable properties are achieved comprise only a comparatively small number of components.

According to the invention, a circuit arrangement as described in the opening paragraph is for this purpose characterized in that the further branch is conductive for AC current in both directions and the further end of the further branch is connected to a first input terminal.

In a circuit arrangement according to the invention, the further branch is conductive for AC current in both directions (*i.e*. from the first end to the further end and *vice versa*) and contains no diodes. Since the further end of the further branch is connected to an input terminal, the further branch couples a point of the DC-AC converter at which a high-frequency voltage is present during lamp operation to an input of the rectifying means. It is achieved thereby that the diodes in the rectifying means not only rectify the low-frequency supply voltage but also perform a function which corresponds to that of the diodes in the further branch in the known circuit. As a result, a circuit arrangement according to the invention has favourable properties as regards interference in the supply voltage source and power factor, while the circuit arrangement can at the same time be realised with a comparatively small number of components. Thanks to this comparatively small number of components, the circuit arrangement is comparatively simple and therefore also comparatively easy to manufacture.

An advantageous embodiment of a circuit arrangement according to the invention is characterized in that the further branch comprises second capacitive means.

The capacitive means in the further branch prevent a direct current from flowing through the further branch. If these capacitive means were absent, a discharge lamp operated by means of the circuit arrangement might pass a direct current under certain circumstances, whereby cataphoretic effects could occur in the lamp. When the further branch is connected to a further input terminal *via* third capacitive means in this advantageous embodiment of a circuit arrangement according to the invention, the second capacitive means and the third capacitive means form a filter for suppressing supply mains interference. The second capacitive means in such an embodiment of a circuit arrangement according to the invention fulfil both the function of blocking direct current and the function of filtering out interference in the supply voltage mains.

A further advantageous embodiment of a circuit arrangement according to the invention is characterized in that the impedance of the further branch is substantially zero. Since the further branch in a circuit arrangement according to the invention contains no diodes, while it is not necessary in every embodiment to include second capacitive means in the further branch, the further branch may be realised as a conductive connection in this further advantageous embodiment, *i.e.* no components are included in the said branch. As a result, this further advantageous embodiment of a circuit arrangement according to the invention can be realised in a comparatively simple manner and at a comparatively low price.

A further embodiment of a circuit arrangement according to the invention is characterized in that the rectifying means comprise a voltage multiplier. When the amplitude of the low-frequency supply voltage is comparatively low compared with the operating voltage of a lamp operated with the circuit arrangement, it may be advantageous to cause the DC voltage present across the first capacitive means in the first branch to be comparatively high.

Embodiments of the invention will be explained with reference to a drawing.

In the drawing:
Fig. 1 shows an embodiment of a circuit arrangement according to the invention;
Fig. 2 shows a further embodiment of a circuit arrangement according to the invention; and
Fig. 3 shows an alternative embodiment of a circuit arrangement according to the invention.

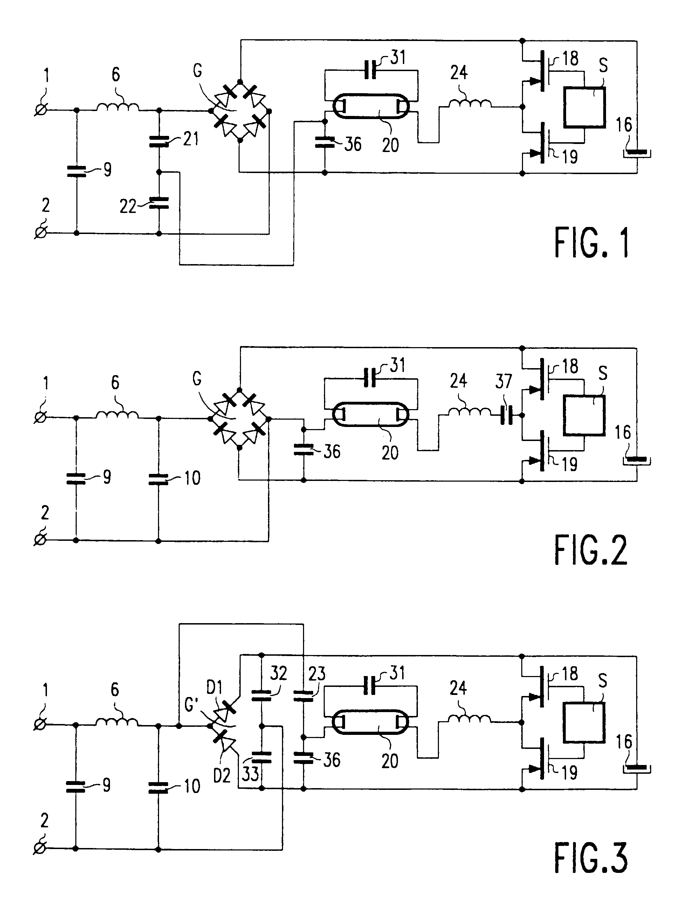

In Fig. 1, reference numberals 1 and 2 denote input terminals for connection to a low-frequency supply voltage source. The rectifying means are formed by a diode bridge G. The first capacitive means and the first branch in this embodiment are formed by capacitor 16. The DC-AC converter is formed by switching elements 18 and 19, control circuit S, coil 24, capacitor 31, and capacitor 36. A discharge lamp 20 is connected to the DC-AC converter. The further branch, which in this embodiment comprises capacitive means, is formed by capacitor 22. Capacitor 21 in this embodiment forms third capacitive means.

Input terminals 1 and 2 are interconnected by capacitor 9. Input terminal 1 is also connected to a first end of coil 6. A further end of coil 6 is connected to input terminal 2 through a series arrangement of capacitor 21 and capacitor 22. The further end of coil 6 is also connected to a further input of the diode bridge G, and input terminal 2 is connected to a further input of diode bridge G. A first output of the diode bridge G is connected to a further output of the diode bridge G *via* capacitor 16. Capacitor 16 is shunted by a series arrangement of the two switching elements 18 and 19. A control electrode of switching element 18 and a control electrode of switching element 19 are connected to respective outputs of control circuit S. A junction point of switching element 18 and switching element 19 is connected to a first end of coil 24. A further end of coil 24 is connected to a first electrode of the discharge lamp 20. A further electrode of the discharge lamp 20 is connected to a first side of capacitor 36. A further side of capacitor 36 is connected to a side of capacitor 16. The discharge lamp 20 is shunted by capacitor 31. A junction point of the discharge lamp 20 and capacitor 36 in this embodiment forms the first end of the further branch. The further end of the further branch is input terminal 2.

The operation of the circuit arrangement shown in Fig. 1 is as follows.

When the input terminals 1 and 2 are connected to a supply voltage source which supplies a low-frequency supply voltage, this low-frequency supply voltage is rectified by the diode bridge G, whereby a DC voltage approximately equal to the maximum amplitude of the low-frequency supply voltage is present across capacitor 16. At the same time, the control circuit S renders the two switching elements alternately conducting and non-conducting with high frequency. As a result of this, a high-frequency current flows through the branch formed by coil 24, discharge lamp 20, capacitor 31 and capacitor 36, and a high-frequency voltage is present at a common junction point of capacitor 36 and discharge lamp 20. The fact that this common junction point is connected to input terminal 2 through the further branch formed by capacitor 22 achieves that the low-frequency supply voltage source supplies current during time intervals in which the instantaneous amplitude of the low-frequency supply voltage is lower than the voltage across the capacitor 16. This means that the amount of interference (conducted interference) caused by the circuit arrangement is considerably less than if the circuit arrangement were not provided with the further branch formed by capacitor 22. Capacitor 9 and coil 6 together form an input filter for suppressing high-frequency interference. In the present embodiment, the series arrangement of capacitor 21 and capacitor 22 also serve as a filter for suppressing interference.

In the circuit arrangement shown in Fig. 2, components corresponding to components of the circuit arrangement shown in Fig. 1 are given the same reference letters or numerals. The circuit arrangement shown in Fig. 2 differs from that shown in Fig. 1 in that the series arrangement of capacitor 21 and capacitor 22 is replaced by capacitor 10, and in that a capacitor 37 is included between a common junction point of the switching elements and the first end of coil 24. In addition, the circuit arrangement shown in Fig. 2 differs from that shown in Fig. 1 in that the further branch of the circuit arrangement shown in Fig. 2 comprises no capacitor, but is formed by a conductive connection whose impedance is substantially zero between input terminal 2 and the junction point of the discharge lamp 20 and the capacitor 36.

The operation of the circuit arrangement shown in Fig. 2 is similar to the operation of the circuit arrangement shown in Fig. 1.

When the input terminals 1 and 2 are connected to a supply voltage source which supplies a low-frequency supply voltage, this low-frequency supply voltage is rectified by diode bridge G so that a DC voltage is present across capacitor 16, and the control circuit S renders the two switching elements alternately conducting and non-conducting with high frequency. As a result of this, a high-frequency current flows through the branch formed by capacitor 37, coil 24, discharge lamp 20, capacitor 31 and capacitor 36, and a high-frequency voltage is present at a common junction point of capacitor 36 and discharge lamp 20. The presence of the further branch achieves that the low-frequency supply voltage source supplies current during time intervals in which the instantaneous amplitude of the low-frequency supply voltage is lower than the voltage across capacitor 16. This means, as it does for the circuit arrangement shown in Fig. 1, that the amount of interference (conducted interference) caused by the circuit arrangement is considerably less than if the circuit arrangement were not provided with the further branch. Capacitor 9 and coil 6 together form an input filter for suppressing high-frequency interference also in this embodiment. Capacitor 10 again serves as a filter for suppressing interference. Capacitor 37 prevents a direct current from flowing through the further branch.

In the alternative embodiment of a circuit arrangement according to the invention shown in Fig. 3, components corresponding to the components of the circuit arrangement shown in Fig. 1 are given the same reference letters or numerals. The circuit arrangement shown in Fig. 3 differs from that shown in Fig. 1 in that the series arrangement of capacitor 21 and capacitor 22 is replaced by capacitor 10 and in that the rectifying bridge G is replaced by a voltage doubler G' built up from diodes D1 and D2 and capacitors 32 and 33. The circuit arrangement shown in Fig. 3 also differs from that shown in Fig. 1 in that the further branch of the circuit arrangement shown in Fig. 3 is formed by capacitor 23 which interconnects input terminal 2 and the common junction point of the discharge lamp 20 and the capacitor 36.

The operation of the circuit arrangement shown in Fig. 3 is similar to the operation of the circuit arrangements shown in Figs. 1 and 2 and is accordingly not described in detail. Since the diode bridge G is replaced by the voltage doubler G', the voltage across capacitor 16 is approximately twice as high during stationary lamp operation. This may be desirable when the maximum amplitude of the low-frequency supply voltage is comparatively low. It was also found for the circuit arrangement shown in Fig. 3 that the further branch achieves a considerable interference suppression.

For practical embodiments of the circuit arrangements shown in Figs. 1 and 2, with which a low-pressure mercury discharge lamp with a rated power of approximately 18 W was operated and which were supplied with a substantially sinusoidal supply voltage with a frequency of approximately 50 Hz, it was found that the amount of interference caused in the supply voltage source was considerably lower than the amount allowed by IEC/552, part II.

## Claims

1. A circuit arrangement suitable for high-frequency operation of a discharge lamp (20), provided with
- input terminals (1,2) for connection to a low-frequency supply voltage source,
- rectifying means (G, G') coupled to the input terminals for rectifying a lowfrequency supply voltage supplied by the low-frequency supply voltage source,
- a first branch comprising first capacitive means (16) and connected to the rectifying means,
- a DC-AC-converter coupled to the first capacitive means for generating a high-frequency current from a direct voltage present across the first capacitive means, said DC-AC-converter being provided with a load circuit comprising a series arrangement of an inductive element (24), lamp connection terminals and further capacitive means (36), and
- a further branch (22; 23, 6) of which a first end is connected to a terminal of the DC-AC-converter at which a high-frequency voltage is present during lamp operation and of which a second end is coupled to the rectifying means,
characterized in that the further branch is conductive for AC-currents in both directions, in that the first end of the further branch is connected to a terminal between a lamp connection terminal and the further capacitive means and in that the second end of the further branch is directly connected to an input terminal.

2. A circuit arrangement a claimed in Claim 1, characterized in that the further branch comprises second capacitive means (22, 23).

3. A circuit arrangement as claimed in Claim 2, characterized in that the further branch is connected to a further input terminal *via* third capacitive means (21).

4. A circuit arrangement as claimed in Claim 1 characterized in that the impedance of the further branch is substantially zero.

5. A circuit arrangement as claimed in any of the preceding Claims, characterized in that the rectifying means comprise a voltage multiplier (32, 33, D1, D2).

## Patentansprüche

1. Geeignete Schaltungsanordnung für Hf-Betrieb einer Entladungslampe (20) mit folgenden Elementen:
- Eingangsklemmen (1, 2) zum Anschließen an eine Nf-Speisespannungsquelle,
- mit den Eingangsklemmen gekoppelte Gleichrichtermittel (G, G') zum Gleichrichten einer Nf-Speisespannung aus der Nf-Speisespannungsquelle,
- eine erste Abzweigung mit ersten Kapazitätsmitteln (16) und in Verbindung mit den Gleichrichtermitteln,
- einen mit den ersten Kapazitätsmitteln gekoppelten Wechselrichter zum Erzeugen eines Hf-Stroms aus einer Gleichspannung an den ersten Kapazitätsmitteln, wobei der Wechselrichter mit einer Lastschaltung mit einer Reihenschaltung aus einem Induktionselement (24), Lampenverbindungsklemmen und weiteren Kapazitätsmitteln (36) versehen ist, und
- eine weitere Abzweigung (22; 23, 6), von der ein erstes Ende an eine Klemme des Wechselrichters angeschlossen ist, die im Lampenbetrieb eine Hf-Spannung führt und von der ein zweites Ende mit den Gleichrichtermitteln gekoppelt ist, dadurch gekennzeichnet, daß die weitere Abzweigung für Wechselströme in beiden Richtungen leitet und das erste Ende der weiteren Abzweigung an eine Eingangsklemme zwischen einer Lampenverbindungsklemme und den weiteren Kapazitätsmitteln angeschlossen wird, und das zweite Ende der weiteren Abzweigungdirekt an eine Eingangsklemme angeschlossen ist.

2. Schaltungsanordnung nach Anspruch 1, dadurch gekennzeichnet, daß die weitere Abzweigung zweite Kapazitätsmittel (22, 23) enthält.

3. Schaltungsanordnung nach Anspruch 2, dadurch gekennzeichnet, daß die weitere Abzweigung an eine weitere Eingangsklemme über dritte Kapazitätsmittel (21) angeschlossen ist.

4. Schaltungsanordnung nach Anspruch 1, dadurch gekennzeichnet, daß die Impedanz der weiteren Abzweigung im wesentliche gleich Null ist.

5. Schaltungsanordnung nach einem oder mehreren der vorangehenden Ansprüche, dadurch gekennzeichnet, daß die Gleichrichtermittel einen Spannungsvefvielfacher (32, 33, D1, D2) enthalten.

## Revendications

1. Circuit de commutation convenable pour le fonctionnement à haute fréquence d'une lampe à décharge (20), muni
- de bornes d'entrée (1, 2) pour être reliées à une source de tension d'alimentation basse fréquence,
- de moyens redresseurs (G, G') couplés aux bornes d'entrée pour redresser une tension d'alimentation basse fréquence fournie par la source de tension d'alimentation basse fréquence,
- d'une première branche comportant des premiers moyens capacitifs (16) et étant reliée aux moyens redresseurs,
- d'un convertisseur courant continu-courant alternatif couplé aux premiers moyens capacitifs pour engendrer un courant haute fréquence à partir d'une tension continue présente à travers les premiers moyens capacitifs, ledit convertisseur courant continu-courant alternatif étant muni d'un circuit de charge comportant un circuit en série d'un élément inductif (24), des bornes de connexion de lampe et de nouveaux autres moyens capacitifs (36), et
- d'une nouvelle autre branche (22; 23, 6) dont une première extrémité est reliée à une borne du convertisseur courant continu-courant alternatif sur laquelle une tension haute fréquence est présente pendant le fonctionnement de la lampe et dont une deuxième extrémité est couplée aux moyens redresseurs, caractérisé en ce que la nouvelle autre branche est conductrice dans les deux directions pour des courants alternatifs, en ce que la première extrémité de la nouvelle autre branche est reliée à une borne située entre une borne de connexion de lampe et les nouveaux autres moyens capacitifs, et en ce que la deuxième extrémité de la nouvelle autre branche est reliée directement à une borne d'entrée.

2. Circuit de commutation selon la revendication 1, caractérisé en ce que la nouvelle autre branche comporte des deuxièmes moyens capacitifs (22, 23).

3. Circuit de commutation selon la revendication 2, caractérisé en ce que la nouvelle autre branche est reliée à une nouvelle autre borne d'entrée par l'intermédiaire de troisièmes moyens capacitifs (21).

4. Circuit de commutation selon la revendication 1, caractérisé en ce que l'impédance de la nouvelle autre branche est sensiblement égale à zéro.

5. Circuit de commutation selon l'une quelconque des revendications précédentes, caractérisé en ce que les moyens redresseurs comportent un multiplicateur de tension (32, 33, D1, D2).
